# FASCICULE DE BREVET EUROPEEN

(11) **EP 3 286 464 B1**
(45) Date de publication et mention de la délivrance du brevet: **08.07.2020**
(21) Numéro de dépôt: 16722303.1
(22) Date de dépôt: 22.04.2016
(51) Int. Cl.: F16K 1/22, F02D 9/10, F16K 31/04, F02D 9/02

(54) **VANNE POUR CANALISATION D'AIR DE MOTEUR DE VÉHICULE AUTOMOBILE**
LUFTROHRVENTIL EINES MOTORS EINES KRAFTFAHRZEUGS
AIR PIPE VALVE OF AN ENGINE OF A MOTOR VEHICLE

(30) Priorité: 23.04.2015 FR 1553658
(43) Date de publication de la demande: 28.02.2018
(73) Titulaire: Valeo Systemes de Controle Moteur, 95800 Cergy Saint Christophe (FR)
(72) Inventeur: PERREAUT, Xavier, 95800 Cergy Saint Christophe (FR); LANOE, Thierry, 95520 Osny (FR)
(74) Mandataire: Garcia, Christine
(86) Numéro de dépôt international: PCT/FR2016/050965
(87) Numéro de publication internationale: WO 2016/170292

(56) Documents cités:
- EP-A2- 1 099 842
- DE-A1- 19 740 204
- JP-A- 2004 169 627
- US-A- 5 752 484
- US-A- 5 983 858
- US-A1- 2002 029 760

## Description

La présente invention concerne une vanne pour canalisation de fluide, et notamment d'air, pour moteur de véhicule automobile.

En particulier, le domaine de la présente invention est celui des équipements pour l'alimentation du moteur, notamment les actionneurs ou vannes doseuses d'air qui participent au fonctionnement de moteurs à combustion interne essence.

En cas de panne majeure des moyens de commande électroniques du moteur, il est nécessaire, pour des raisons de sécurité, que le véhicule puisse être immobilisé sur la bande d'arrêt d'urgence ou être ramené à un atelier de réparation.

A cet effet, de tels moteurs à essence ont besoin d'une vanne pilotable électriquement revenant automatiquement dans une position par défaut en cas de panne du système de pilotage. Cette position par défaut est une position de sécurité, également appelée position dite « *limp home* », intermédiaire entre deux positions extrêmes d'ouverture et de fermeture.

Il est connu des vannes pour canalisation d'air comportant un corps présentant un conduit de passage du fluide, un obturateur, par exemple un volet, un arbre de commande de l'obturateur, libre en rotation, et un organe d'entraînement en rotation dudit arbre de commande. La rotation du volet permet de régler le débit de fluide circulant dans le conduit.

Certaines vannes sont équipées d'un ressort de rappel afin de garantir le retour en position de sécurité du volet mobile de la vanne en cas de panne ou d'interruption du moteur. Cependant ce ressort est continuellement sollicité lorsque le moteur fonctionne normalement.

US2002/0029760 A1 divulgue une vanne selon le préambule de la revendication 1. JP 2004 169627 A divulgue une vanne d'un autre type.

L'invention propose d'améliorer la fiabilité des vannes pilotables présentant un retour en position par défaut en cas de panne du système de pilotage.

La vanne de l'invention est définie par les caractéristiques de la revendication 1. D'autres aspects de l'invention sont indiqués dans les revendications dépendantes.

À cet effet, la présente invention a pour objet une vanne pour canalisation d'air de moteur de véhicule automobile comprenant :
- un obturateur monté mobile entre une première position extrême et une seconde position extrême ;
- un moteur d'entraînement configuré pour entraîner l'obturateur entre les deux positions extrêmes au moyen d'un moyen d'entraînement ; et
- un dispositif de rappel configuré pour rappeler l'obturateur dans une position par défaut intermédiaire entre les deux positions extrêmes,
dans laquelle le dispositif de rappel comprend un premier moyen de rappel disposé de sorte à rappeler l'obturateur de la seconde position extrême à la position par défaut et un second moyen de rappel disposé de sorte à rappeler l'obturateur de la première position extrême à la position par défaut, les deux moyens de rappel étant différents et indépendants l'un de l'autre et chacun disposé de sorte à exercer une force de rappel directement sur le moyen d'entraînement pendant le rappel de l'obturateur vers la position par défaut.

Avantageusement, la robustesse d'une telle vanne est améliorée tout en garantissant un dispositif de rappel relativement simple de retour en position de sécurité et compacte. Une telle vanne selon l'invention permet avantageusement une indépendance des éléments la constituant et une indépendance des deux plages de fonctionnement des deux moyens de rappel assurant ainsi une plus grande souplesse dans la réalisation des différents éléments.
- selon l'invention, les deux moyens de rappel exercent alternativement leur force de rappel de sorte à rappeler l'obturateur d'une des positions extrêmes à la position par défaut ;
- selon l'invention, le corps de vanne et le moyen d'entraînement sont configurés de sorte que :
   - pendant que l'obturateur tourne vers la seconde position extrême : une première extrémité du second moyen de rappel est entraînée par le moyen d'entraînement et une seconde extrémité du second moyen de rappel est bloquée par le corps de vanne tandis que une première et une seconde extrémités du premier moyen de rappel sont bloquées par le corps de vanne ; et
   - pendant que l'obturateur tourne vers la première position extrême : la première extrémité du premier moyen de rappel est bloquée par le corps de vanne et la seconde extrémité du premier moyen de rappel est entraînée par le moyen d'entraînement tandis que la première et la seconde extrémités du second moyen de rappel sont bloquées par le moyen d'entraînement ;
- selon l'invention, la vanne comprend une première et une seconde butées de déplacement maximal pour la roue dentée configurées pour bloquer la rotation du moyen d'entraînement lorsque l'obturateur est respectivement dans la première position extrême et dans la seconde position extrême;
- selon l'invention, le corps de vanne comporte deux autres butées définissant la position par défaut, une première butée est configurée pour bloquer la seconde extrémité du second moyen de rappel quand l'obturateur tourne de la position par défaut la seconde position extrême;
   une seconde butée est configurée pour bloquer la seconde extrémité du premier moyen de rappel quand l'obturateur tourne de la position par défaut vers la seconde position extrême.

La vanne pour canalisation d'air de moteur de véhicule automobile selon l'invention peut également comprendre une ou plusieurs des caractéristiques ci- dessous:
- la vanne est telle que :
   - le premier moyen de rappel est fixé solidairement au corps de vanne à sa première extrémité et le second moyen de rappel est fixé solidairement au moyen d'entraînement à sa première extrémité ;
   - le moyen d'entraînement comprend une première et une seconde butées d'entraînement configurées pour entraîner respectivement la seconde extrémité du premier moyen de rappel pendant que l'obturateur tourne vers la première position extrême et la première extrémité du second moyen de rappel pendant que l'obturateur tourne vers la seconde position extrême ; et
   - le corps de vanne comprend une première et une seconde butée configurées pour bloquer la seconde extrémité respectivement du second moyen de rappel et du premier moyen de rappel quand l'obturateur tourne de la position par défaut vers la seconde position extrême ;
- le premier et le second moyens de rappel comprennent respectivement un premier et un second ressort de torsion agencés coaxialement ;
- le corps de vanne comprend un siège adapté pour recevoir un doigt formé par la première extrémité du premier moyen de rappel ;
- le moyen d'entraînement comporte un anneau cylindrique solidaire en rotation du moyen d'entraînement et coaxial des premier et second ressorts de torsion, l'anneau cylindrique comprenant une échancrure angulaire adaptée pour permettre la libre rotation du moyen d'entraînement sur un secteur angulaire défini sans entraîner au moins l'un des premier et second moyens de rappel, l'échancrure comprenant un premier bord formant la première butée d'entraînement d'un doigt formé par la seconde extrémité du premier moyen de rappel et agencé pour recevoir un doigt formé par la première extrémité du second moyen de rappel ;
- le premier bord de l'échancrure est configuré pour que l'angle entre l'axe longitudinal du doigt formé par la seconde extrémité du premier moyen de rappel et l'axe longitudinal du doigt formé par la première extrémité du second moyen de rappel soit sensiblement nul ;
- l'anneau cylindrique du moyen d'entraînement est agencé entre le premier et le second ressort de torsion ;
- le moyen d'entraînement est sensiblement dépourvu de dépouille ;
- la vanne comprend une première et une seconde butées de déplacement maximal pour la roue dentée configurées pour bloquer la rotation du moyen d'entraînement lorsque l'obturateur est respectivement dans la première position extrême et dans la seconde position extrême.

D'autres caractéristiques et avantages de l'invention apparaîtront à la lecture de la description détaillée des modes de réalisation donnés à titre d'exemples non limitatifs et illustrés, accompagnée des figures ci-dessous :
- la figure 1 est une vue en coupe axiale d'une vanne pour canalisation d'air selon un mode de réalisation de l'invention ;
- la figure 2 illustre une vue schématique sous forme linéaire de la vanne pour canalisation d'air selon l'invention ;
- la figure 3 est une vue, en perspective, de la chaîne cinématique réversible entre le moteur d'entraînement et l'obturateur de la vanne de la figure 1 ;
- la figure 4 est une vue de dessous, en perspective, de l'agencement de deux ressorts de torsion et de l'organe d'entraînement de la vanne de la figure 1 ;
- la figure 5 est vue en coupe axiale de l'agencement de la figure 4 ; et
- la figure 6 est une vue en perspective de l'organe d'entraînement de la figure 4.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

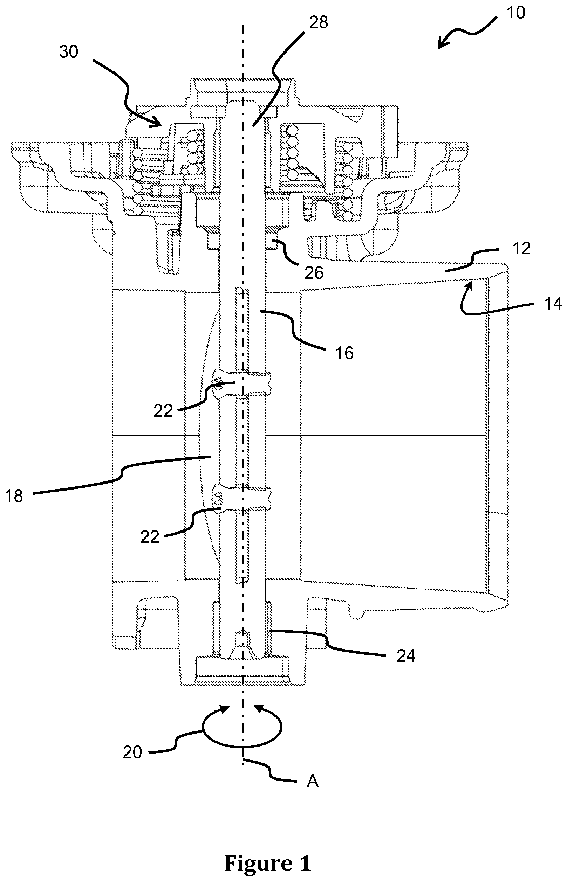

L'invention concerne une vanne de circulation d'air pour canalisation de moteur, notamment pour véhicule automobile. En particulier, la figure 1 illustre un exemple de vanne 10 selon l'invention dans lequel la vanne est configurée pour régler le débit de gaz d'admission d'un moteur essence.

La vanne 10 comprend un corps de vanne 12 à l'intérieur duquel est ménagé un conduit 14 de circulation du fluide, de préférence de l'air. De préférence, le conduit est cylindrique à section sensiblement circulaire.

Dans le corps de vanne 12, issu généralement de fonderie, sont reçus un arbre de commande 16, libre en rotation avec, solidaire de celui-ci, un obturateur 18 permettant d'obturer plus ou moins le conduit 14 en fonction de la position angulaire de l'arbre de commande 16, comme illustré par la flèche repérée 20 tournant autour de l'axe longitudinal, noté A, dudit arbre de commande 16.

Avantageusement, l'obturateur 18 est un volet, par exemple du type volet à papillon, qui présente une forme sensiblement discale correspondant sensiblement à la section intérieure de la canalisation d'air. L'axe longitudinal A de l'arbre de commande 16 est axe de symétrie du volet. Cet agencement présente l'avantage que l'effort d'entraînement et l'effort de rappel de l'obturateur sont indépendants du débit d'air.

L'arbre de commande 16 est lié en rotation au volet d'obturation 18 par des organes de fixation 22 permettant au volet de pouvoir tourner avec l'arbre de commande 16 entre deux positions extrêmes P₁ et P₂. Une des deux positions extrêmes correspond à une position dans laquelle la vanne est ouverte totalement permettant de laisser passer l'air, et l'autre des positions extrêmes correspond à une position dans laquelle la vanne est fermée totalement configurée pour bloquer le passage de l'air.

Par exemple, dans le cas d'un volet à papillon de forme sensiblement discale : le plan du volet serait sensiblement perpendiculaire à l'axe longitudinal du conduit dans la position extrême d'obturation et parallèle à la canalisation d'air dans la position extrême d'ouverture maximum.

La vanne 10 comprend en outre des moyens de liaison pivot entre le corps 12 et l'arbre de commande 16, par exemple deux paliers inférieur 24 et supérieur 26, pour le mouvement rotatif de l'arbre de commande 16 par rapport à son axe longitudinal A.

Dans chacun de ces deux paliers inférieur 24 et supérieur 26 est reçu une extrémité de l'arbre de commande 16, permettant à celui-ci de pivoter librement autour de l'axe longitudinal A, par un ajustement glissant prévu entre l'arbre et les paliers. L'extrémité 27 de l'arbre, dite inférieure, s'engage dans le palier inférieur 24, tandis que l'autre extrémité 28 de l'arbre, dite supérieure, traverse le palier supérieur 26 et débouche vers l'extérieur du corps de vanne 12 pour être reliée à un moyen d'entraînement 30 en rotation de l'arbre de commande 16.

La vanne 10 comprend en outre un moteur d'entraînement (non représenté) configuré pour entraîner l'obturateur 18 entre les deux positions extrêmes P₁, P₂ au moyen du moyen d'entraînement 30. Le moyen d'entraînement 30 comprend au moins une roue d'engrenage configurée pour être entraînée par la rotation du rotor du moteur d'entraînement et pour entraîner en rotation l'arbre de commande 16. Bien entendu, il peut y avoir plus d'une roue d'engrenage formant une chaîne cinématique réversible entre le moteur d'entraînement et l'obturateur 18.

De plus, la vanne 10 selon l'invention comprend un dispositif de rappel configuré pour rappeler l'obturateur 18 dans une position par défaut, dite de sécurité, notée P_{LH}, intermédiaire entre les deux positions extrêmes P₁, P₂.

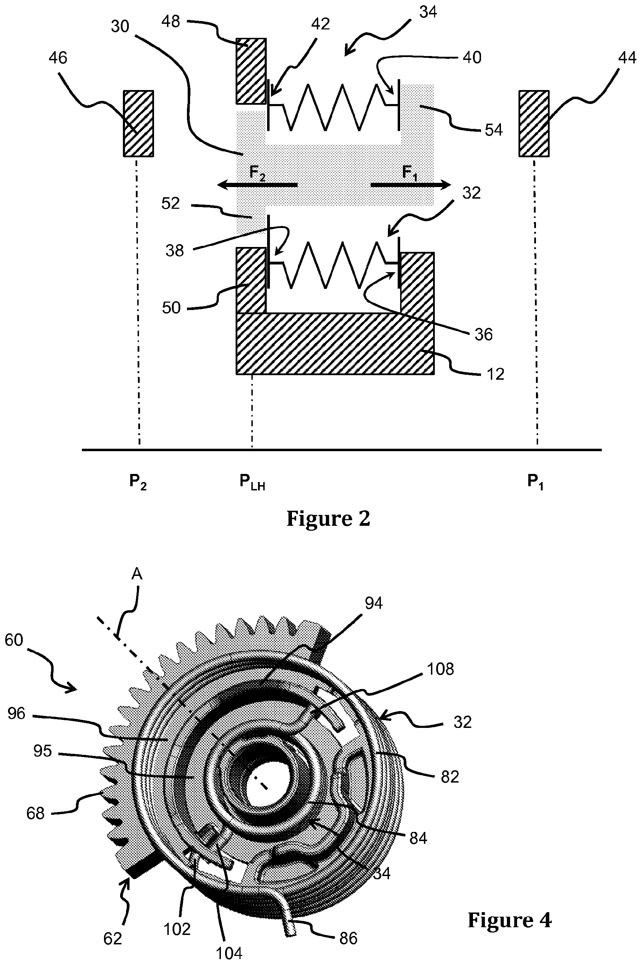

Le dispositif de rappel et son agencement dans la vanne vont maintenant être décrits plus en détail en regard de la figure 2.

Le dispositif de rappel comprend un premier moyen de rappel 32 disposé de sorte à rappeler l'obturateur 18 de la première position extrême P₁ à la position par défaut P_{LH}, c'est-à-dire dans le sens illustré par la flèche F₂.

Le dispositif de rappel comporte également un second moyen de rappel 34 agencé de sorte à rappeler l'obturateur 18 de la seconde position extrême P₂ à la position par défaut P_{LH}, c'est-à-dire dans le sens de la flèche notée F₁.

En outre, les deux moyens de rappel 32, 34 sont différents et indépendants l'un de l'autre et disposé de sorte à exercer chacun une force de rappel directement sur le moyen d'entraînement 30 pendant le rappel de l'obturateur 18 vers la position par défaut P_{LH}.

Par « différents », on entend que les deux moyens de rappel 32, 34 sont distincts l'un de l'autre. Par exemple, dans le cas de deux ressorts de torsion, cela exclut le cas où les deux ressorts sont formés en continuité de matière à partir des mêmes fils et reliés l'un à l'autre directement.

Par « indépendants », on entend que les deux moyens de rappel 32, 34 sont découplés, c'est-à-dire que les deux moyens de rappel 32, 34 exercent leur force de rappel indépendamment l'un de l'autre. En particulier, les deux moyens de rappel 32, 34 exercent alternativement leur force de rappel de sorte à rappeler l'obturateur 18 d'une des positions extrêmes P₁, P₂ à la position par défaut P_{LH}. En d'autres termes, les deux moyens de rappel 32, 34 ne travaillent pas simultanément pour ramener l'obturateur 18 dans la position par défaut P_{LH}. Dans la position intermédiaire par défaut P_{LH}, les ressorts sont en précontrainte et impose ainsi d'avoir une force supérieure à un seuil prédéterminé afin de quitter cette position intermédiaire. En outre, les deux moyens de moyens de rappel 32, 34 travaillent en sens opposés : l'un dans le sens illustré par la flèche F₂ de la première position extrême P₁ à la position par défaut P_{LH} et l'autre dans le sens illustré par la flèche F₁ de la seconde position extrême P₂ à la position par défaut P_{LH}.

Le premier moyen de rappel 32 est fixé solidairement au corps de vanne 12 à une première extrémité 36. Le premier moyen de rappel 32 comporte en outre une seconde extrémité 38 opposée à la première extrémité 36.

Le second moyen de rappel 34 est fixé solidairement au moyen d'entraînement 30 à une première extrémité 40 et comporte une seconde extrémité 42 opposée à la première extrémité 40.

Selon l'invention, le corps de vanne 12 comporte deux butées de déplacement maximal 44, 46 du moyen d'entraînement 30, chacune configurée pour bloquer le déplacement du moyen d'entraînement 30 lorsque l'obturateur 18 atteint respectivement la première position extrême P₁ et la seconde position extrême P₂.

Selon l'invention, le corps de vanne 12 comporte deux autres butées 48, 50 définissant la position par défaut ou « *limp home ».* Une première butée 48 est configurée pour bloquer la seconde extrémité 42 du second moyen de rappel 34 quand l'obturateur 18 tourne de la position par défaut P_{LH} vers la seconde position extrême P₂. Une seconde butée 50 est configurée pour bloquer la seconde extrémité 38 du premier moyen de rappel 32 quand l'obturateur 18 tourne de la position par défaut vers la seconde position extrême P₂.

Bien entendu, selon une alternative, une unique butée peut définir la position par défaut ou « *limp home* » en étant configurée pour bloquer la seconde extrémité 42 du second moyen de rappel 34 quand l'obturateur 18 tourne de la position par défaut P_{LH} vers la seconde position extrême P₂ et pour bloquer la seconde extrémité 38 du premier moyen de rappel 32 quand l'obturateur 18 tourne de la position par défaut vers la seconde position extrême P₂.

En outre, le moyen d'entraînement 30 comprend deux butées d'entraînement 52, 54. La première butée d'entraînement 52 est configurée pour entraîner la seconde extrémité 38 du premier moyen de rappel 32 pendant que l'obturateur 18 tourne de la position de sécurité P_{LH} vers la première position extrême P₁. La seconde butée d'entraînement 54 est configurée pour entraîner la première extrémité 40 du second moyen de rappel 34 pendant que l'obturateur 18 tourne de la position de sécurité P_{LH} vers la seconde position extrême P₂.

Ainsi, le corps de vanne 12 et le moyen d'entraînement 30 sont configurés de sorte que pendant que l'obturateur 18 « tourne » vers la seconde position extrême P₂, c'est-à-dire pendant que le moyen d'entraînement 30 se déplace dans le sens de la flèche F₂ : la première extrémité 40 du second moyen de rappel 34 est entraînée par le moyen d'entraînement 30 via sa seconde butée d'entraînement 54, et la seconde extrémité 42 du second moyen de rappel 34 est bloquée par la butée 48 du corps de vanne 12, tandis que la première et la seconde extrémités 36, 38 du premier moyen de rappel 32 sont bloquées par le corps de vanne 12.

En outre, pendant que l'obturateur 18 tourne vers la première position extrême P₁, c'est-à-dire pendant que le moyen d'entraînement 30 se déplace dans le sens de la flèche F₁ : la première extrémité 36 du premier moyen de rappel 32 est bloquée par le corps de vanne 12, et la seconde extrémité 38 du premier moyen de rappel 32 est entraînée par le moyen d'entraînement 30 via sa première butée d'entraînement 52, tandis que la première et la seconde extrémités 40, 42 du second moyen de rappel 34 sont bloquées par le moyen d'entraînement 30.

En fonctionnement « normal », c'est-à-dire lorsque le moteur est alimenté en énergie, le moteur génère un couple d'entraînement supérieur au couple de rappel du premier moyen de rappel 32 afin d'entraîner l'obturateur 18 via le moyen d'entraînement 30 jusqu'à la position extrême P₁ et supérieur au couple de rappel du second moyen de rappel 34 afin d'entraîner l'obturateur 18 via le moyen d'entraînement 30 jusqu'à la position extrême P₂.

Le moteur d'entraînement sert de frein lorsque l'obturateur, ici le volet à papillon, s'approche de la position par défaut ou de sécurité P_{LH}, soit en phase d'ouverture, lorsque le volet à papillon quitte la position extrême d'obturation, soit en phase de fermeture lorsque le volet à papillon quitte la position extrême d'ouverture.

Lorsque l'obturateur 18 est dans la première position extrême P₁ :
- le moyen d'entraînement 30 est en butée contre le corps de vanne 12, en particulier contre la butée de déplacement maximale 44 bloquant le déplacement du moyen d'entraînement 30 dans le sens de la flèche F₁ ;
- le premier moyen de rappel 32 prend appui à sa première extrémité 36 sur le corps de vanne 12 et à sa deuxième extrémité 38 sur la butée d'entraînement 52 du moyen d'entraînement 30, le premier moyen de rappel 32 est comprimé de sorte à exercer une force de rappel sur la butée d'entraînement 52 pour ramener l'obturateur 18 dans la position de sécurité ; et
- le second moyen de rappel 34 prend appui à chacune de ses extrémités 40, 42 sur le moyen d'entraînement 30.

En cas de panne du moteur lorsque l'obturateur 18 est dans la première position extrême P₁, il est ramené dans la position de sécurité P_{LH} par le dispositif de rappel, en particulier par la force de rappel exercée par le premier moyen de rappel 32. Pendant que l'obturateur retourne de la première position extrême P₁ à la position de sécurité P_{LH}, seul le premier moyen de rappel travaille exerçant sa force de rappel sur le moyen d'entraînement 30 au niveau de la butée d'entraînement 52 jusqu'à ce que la seconde extrémité 38 du premier moyen de rappel 32 prenne appui sur la butée 50 du corps de vanne 12, le moyen d'entraînement 30 atteignant ainsi la position de sécurité P_{LH}.

Lorsque l'obturateur 18 est dans la position de sécurité P_{LH} :
- le premier moyen de rappel 32 prend appui à chacune de ses extrémités 36, 38 sur le corps de vanne 12, la seconde extrémité 38 prend également appui sur le moyen d'entraînement 30 par contact avec la première butée d'entraînement 52 ; et
- le second moyen de rappel 34 prend appui à chacune de ses extrémités 40, 42 sur le moyen d'entraînement 30, la seconde extrémité 42 prend également appui sur le corps de vanne 12 par contact avec la butée 48 définissant la position de sécurité P_{LH}.

Dans cette position de sécurité P_{LH}, aucun des deux moyens de rappel 32, 34 n'exerce de force de rappel sur le moyen d'entraînement 30.

Lorsque l'obturateur 18 est dans la seconde position extrême P₂ :
- le moyen d'entraînement 30 est en butée contre le corps de vanne 12, en particulier contre la butée de déplacement maximale 46 bloquant le déplacement du moyen d'entraînement 30 dans le sens de la flèche F₂ ;
- le second moyen de rappel 34 prend appui à sa première extrémité 40 sur la seconde butée d'entraînement 54 du moyen d'entraînement 30 et à sa deuxième extrémité 42 sur la butée 48 du corps de vanne 12, le second moyen de rappel 34 est comprimé de sorte à exercer une force de rappel sur la seconde butée d'entraînement 54 pour ramener l'obturateur 18 dans la position de sécurité P_{LH} ; et
- le premier moyen de rappel 32 prend appui à chacune de ses extrémités 36, 38 sur le corps de vanne 12, n'exerçant aucune force de rappel sur le moyen d'entraînement 30.

En cas de panne ou d'arrêt du moteur lorsque l'obturateur 18 est dans la seconde position extrême P₂, il est ramené dans la position de sécurité P_{LH} par le dispositif de rappel, en particulier par la force de rappel exercée par le second moyen de rappel 34. Pendant que l'obturateur retourne de la seconde position extrême P₂ à la position de sécurité P_{LH}, seul le second moyen de rappel travaille exerçant sa force de rappel sur le moyen d'entraînement 30 au niveau de la seconde butée d'entraînement 54 jusqu'à ce que le moyen d'entraînement 30 atteigne la position de sécurité P_{LH}, la seconde extrémité 42 du second moyen de rappel 34 prenant alors appui sur le moyen d'entraînement 30.

Un tel agencement permet d'obtenir un débrayage/embrayage des moyens de rappels (32, 34) au même point notamment par l'alignement des deux butées 48, 50 bloquant respectivement la seconde extrémité 42 du second moyen de rappel 34 quand l'obturateur 18 tourne de la position par défaut P_{LH} vers la seconde position extrême P₂ et la seconde extrémité 38 du premier moyen de rappel 32 quand l'obturateur 18 tourne de la position par défaut vers la seconde position extrême P₂.

On va maintenant décrire en détail le dispositif de rappel selon le mode de réalisation de la figure 1.

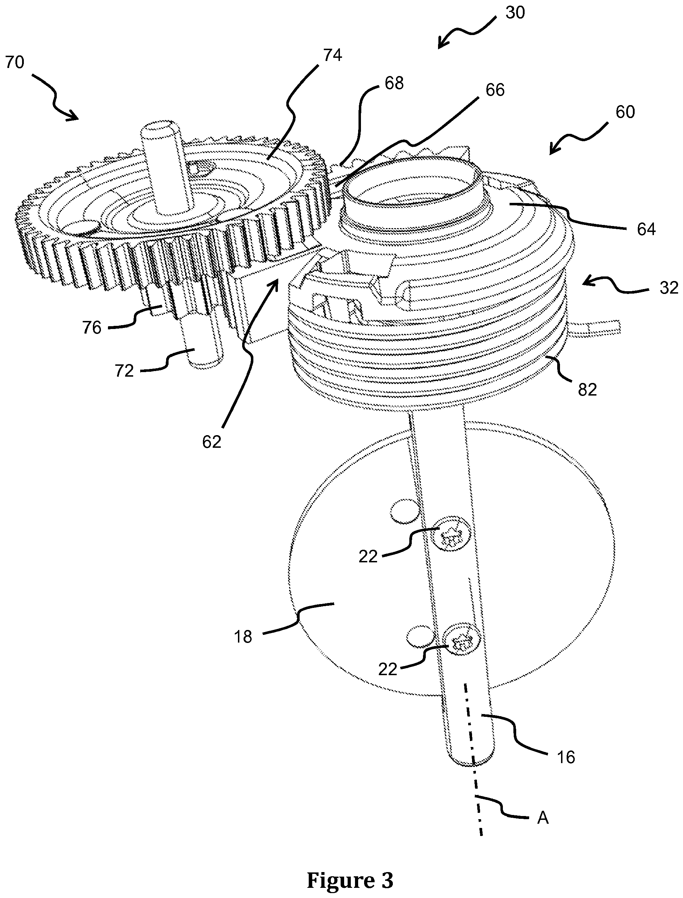

La figure 3 représente une vue, en perspective, de la chaîne cinématique réversible entre le moteur d'entraînement (non représenté) et l'obturateur 18, ici un volet à papillon, de la vanne de la figure 1.

Comme indiqué précédemment, l'extrémité supérieure 28 de l'arbre traverse le palier supérieur 26 et débouche vers l'extérieur du corps de vanne 12 pour être reliée à un moyen d'entraînement 30 en rotation de l'arbre de commande 16. Le moyen d'entraînement comprend un organe d'entraînement 60, par exemple un secteur denté 62 comportant une partie centrale 64 centré sur ledit arbre de commande 16 et une excroissance radiale 66, formant un secteur d'angle légèrement supérieur au débattement angulaire du volet et munie de dents d'engrenage 68.

Le secteur denté 62 est ici lié en rotation à une roue d'engrenage ou roue de renvoie 70 libre en rotation par rapport au corps de vanne 12 autour d'un axe d'articulation 72 parallèle à l'axe longitudinal A de l'arbre de commande 16. Comme indiqué précédemment, la roue d'engrenage 70 est configurée pour être entraînée par la rotation du rotor du moteur d'entraînement et pour entraîner en rotation l'arbre de commande 16.

Le moteur d'entraînement engrène sur un grand pignon 74 de la roue de renvoi 70 tandis que le secteur denté 62 engrène sur un petit pignon 76 de cette dernière. L'actionnement du moteur entraîne une rotation de la roue de renvoie 70 qui entraîne à son tour une rotation du secteur denté 62 et donc de l'obturateur 18, ici un volet par l'intermédiaire de l'arbre de commande 16.

Selon ce mode de réalisation de l'invention, le premier et le second moyens de rappel 32, 34 comprennent respectivement un premier et un second ressorts de torsion 82, 84 agencés coaxialement, par exemple des ressorts hélicoïdaux dont les spires sont enroulées de sorte à être centrées sur l'axe longitudinal A de l'arbre de commande 16. Cet agencement assure une compacité du dispositif de rappel et par conséquent de la vanne.

Comme cela est plus visible sur la figure 4 illustrant une vue de dessous et en perspective, de l'agencement des deux ressorts de torsion 82, 84 et de l'organe d'entraînement 60, le diamètre des spires du premier ressort de torsion 82 est plus grand que celui des spires du second ressort de torsion 84. Le second ressort de torsion 84 est agencé entre le premier ressort de torsion et l'arbre de commande 16.

Le premier ressort 82 est configuré pour rappeler l'obturateur 18 de la première position extrême P₁ à la position par défaut P_{LH}. Le corps de vanne 12 comprend un siège adapté pour recevoir un doigt 86 formé par la première extrémité 36 du premier moyen de rappel 32. Ce doigt est maintenu de façon solidaire dans le siège du corps de vanne 12.

Le second ressort 84 est agencé et configuré pour rappeler l'obturateur 18 de la seconde position extrême P₂ à la position par défaut P_{LH}.

Le corps de vanne 12 comprend une protrusion s'étendant selon l'axe longitudinal A de l'arbre de commande 16 et formant la première butée 48 configurée pour bloquer la seconde extrémité 42 du second ressort 84 quand l'obturateur 18 a atteint la seconde position extrême P₂ en tournant de la position par défaut P_{LH} vers la seconde position extrême P₂.

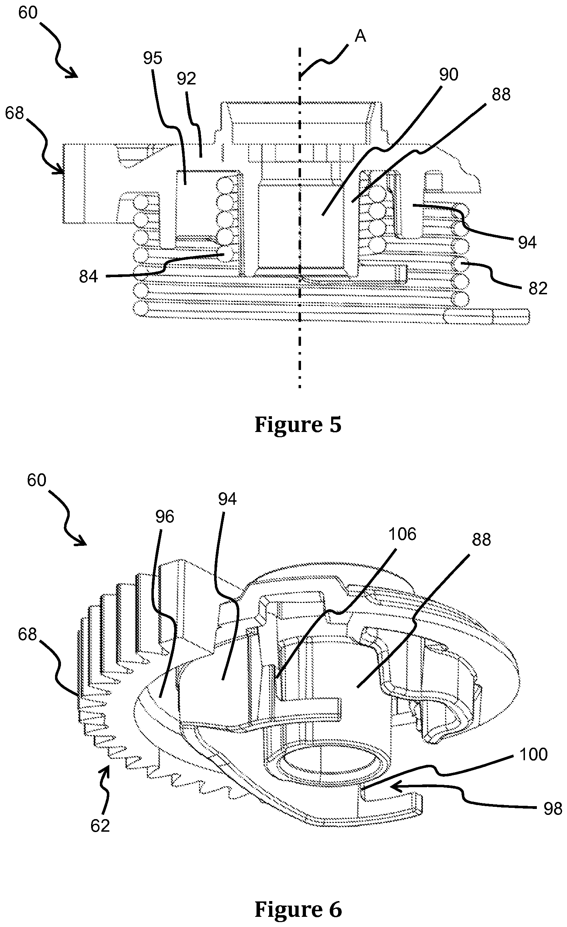

En référence à la figure 5, illustrant une vue en coupe de l'organe d'entrainement 60, celui-ci comprend une paroi cylindrique 88 formant un premier puits 90, s'étendant axialement au-delà d'une paroi 92 s'étendant sensiblement radialement, notamment sensiblement orthogonalement audit à arbre de commande 16, et portant lesdites dents d'engrenage 68. Le premier puits 90 est destiné à recevoir l'arbre de commande 16 pour être relié au moyen d'entraînement en rotation de l'arbre de commande 16.

L'organe d'entraînement 60 comporte en outre un anneau cylindrique 94 solidaire en rotation du moyen d'entraînement 30 et coaxial des premier et second ressorts de torsion 82, 84. L'anneau cylindrique 94 s'étend axialement au-delà de la paroi 92 et forme, avec la paroi cylindrique 88 formant le premier puits, un second puits 95 destiné à recevoir le second ressort 84.

De plus, l'organe d'entraînement 60 comprend une gorge 96 formée dans la paroi 92 entre l'anneau cylindrique 94 et les dents d'engrenage 68 et destinée à recevoir le premier ressort 82. Autrement dit, l'anneau cylindrique 94 est agencé entre le premier et le second ressorts de torsion 82, 84.

En référence aux figures 4 et 6, l'anneau cylindrique 94 comprend une échancrure angulaire 98 adaptée pour permettre la libre rotation du moyen d'entraînement sur un secteur angulaire défini sans entraîner au moins l'un des premier et second ressorts 82, 84. L'échancrure 98 comprend un premier bord 100 formant la première butée d'entraînement 52 d'un doigt 102 formé par la seconde extrémité 38 du premier ressort 82 et agencé pour recevoir un doigt 104 formé par la première extrémité 40 du second ressort 84 .

De plus, le premier bord 100 de l'échancrure est configuré pour que l'angle entre l'axe longitudinal du doigt 102 formé par la seconde extrémité 38 du premier ressort 82 et l'axe longitudinal du doigt 104 formé par la première extrémité 40 du second ressort 84 soit sensiblement nul.

Un tel agencement permet d'obtenir un débrayage/embrayage des ressorts de torsion (82, 84) au même point angulaire et ainsi de n'avoir aucun défaut d'hystérésis quand l'obturateur se déplace d'une position extrême à l'autre, dans un sens aussi bien que dans l'autre.

L'échancrure 98 comprend un second bord 106 sur lequel prend appui un doigt 108 formé par la seconde extrémité 42 du second ressort 84.

Avantageusement, le moyen d'entraînement, et en particulier l'organe d'entraînement, et les butées 48, 50 du corps de vanne sont sensiblement dépourvus de dépouille et de préférence n'ont aucune dépouille assurant l'alignement des deux butées 48, 50 afin de garantir la fiabilité de la vanne lors de son retour en position de sécurité en réduisant les jeux entre les pièces. Ainsi, la limitation, voire la suppression, des jeux entre ces différents éléments de la vanne permet de définir précisément la position intermédiaire « *Limp Home ».*

L'invention a été décrite dans le cadre d'une vanne doseuse de gaz d'admission de moteurs essence. Elle pourra aussi trouver des applications en tant que vanne d'admission pour moteur diesel ou vanne de recirculation de gaz d'échappement ou « vanne EGR » pour *"Exhaust gas recirculation".* Bien entendu, d'autres applications de la vanne conforme à l'invention sont également possibles sans sortir du cadre de l'invention.

L'invention convient pour n'importe quelle technique d'obturation comprenant une chaîne cinématique réversible entre le moteur d'entraînement et l'obturateur. Une telle chaîne cinématique permet au moyen de rappel de déplacer l'obturateur lorsque le moteur n'est plus actionné. Le déplacement de l'obturateur peut-être une translation et/ou une rotation. L'obturateur peut être une soupape, un volet à guillotine, un clapet articulé sur un côté ou un volet à papillon.

## Revendications

1. Vanne (10) pour canalisation d'air de moteur de véhicule automobile comprenant :
- un obturateur (18) monté mobile entre une première position extrême (P₁) et une seconde position extrême (P₂) ;
- un moteur d'entraînement configuré pour entraîner l'obturateur (18) entre les deux positions extrêmes (P₁, P₂) au moyen d'un moyen d'entraînement (30) ;
- un corps de vanne (12) ;
- des moyens d'entrainement (30) ;
- un dispositif de rappel configuré pour rappeler l'obturateur (18) dans une position par défaut (P_{LH}) intermédiaire entre les deux positions extrêmes (P₁, P₂),
dans laquelle le dispositif de rappel comprend un premier moyen de rappel (32) disposé de sorte à rappeler l'obturateur (18) de la première position extrême (P₁) à la position par défaut (P_{LH}) et un second moyen de rappel (34) disposé de sorte à rappeler l'obturateur (18) de la seconde position extrême (P₂) à la position par défaut (P_{LH}), les deux moyens de rappel (32, 34) étant différents et indépendants l'un de l'autre et chacun disposé de sorte à exercer une force de rappel directement sur le moyen d'entraînement (30) pendant le rappel de l'obturateur (18) vers la position par défaut (P_{LH}),
les deux moyens de rappel exerçant alternativement leur force de rappel de sorte à rappeler l'obturateur (18) d'une des positions extrêmes à la position par défaut (P_{LH}), le corps de vanne (12) et le moyen d'entraînement (30) étant configurés de sorte que :
- pendant que l'obturateur (18) tourne vers la seconde position extrême (P₂) : une première extrémité (40) du second moyen de rappel (34) est entraînée par le moyen d'entraînement (30) et une seconde extrémité (42) du second moyen de rappel (34) est bloquée par le corps de vanne (12) tandis qu'une première et une seconde extrémités (36, 38) du premier moyen de rappel (32) sont bloquées par le corps de vanne (12) ; et
- pendant que l'obturateur (18) tourne vers la première position extrême (P₁) : la première extrémité (36) du premier moyen de rappel (32) est bloquée par le corps de vanne (12) et la seconde extrémité (38) du premier moyen de rappel (32) est entraînée par le moyen d'entraînement (30) tandis que la première et la seconde extrémités (40, 42) du second moyen de rappel (34) sont bloquées par le moyen d'entraînement (30),
la vanne comprenant une première et une seconde butées (44, 46) de déplacement maximal configurées pour bloquer la rotation du moyen d'entraînement (30) lorsque l'obturateur (18) est respectivement dans la première position extrême (P₁) et dans la seconde position extrême (P₂) la vanne étant characterisée en ce que le corps de vanne (12) comporte deux autres butées (48, 50) définissant une position par défaut, une des deux autres butées (48) (48) étant configurée pour bloquer la seconde extrémité (42) du second moyen de rappel (34) quand l'obturateur (18) tourne de la position par défaut PLH vers la seconde position extrême P2, l'autre des deux butées (50) étant configurée pour bloquer la seconde extrémité (38) du premier moyen de rappel (32) quand l'obturateur (18) tourne de la position par défaut vers la seconde position extrême P2.

2. Vanne selon la revendication 1, dans laquelle :
- le premier moyen de rappel (32) est fixé solidairement au corps de vanne (12) à sa première extrémité (36) et le second moyen de rappel (34) est fixé solidairement au moyen d'entraînement (30) à sa première extrémité (40) ;
- le moyen d'entraînement (30) comprend une première et une seconde butées d'entraînement (52, 54) configurées pour entraîner respectivement la seconde extrémité (38) du premier moyen de rappel (32) pendant que l'obturateur tourne vers la première position extrême (P₁) et la première extrémité (40) du second moyen de rappel (34) pendant que l'obturateur tourne vers la seconde position extrême (P₂) ; et
- le corps de vanne (12) comprend une première et une seconde butées (48, 50) configurées pour bloquer la seconde extrémité respectivement du second moyen de rappel (34) et du premier moyen de rappel (32) quand l'obturateur tourne de la position par défaut (P_{LH}) vers la seconde position extrême (P₂).

3. Vanne selon l'une quelconque des revendications 1 à 2, dans laquelle le premier et le second moyens de rappel (32, 34) comprennent respectivement un premier et un second ressorts de torsion (82, 84) agencés coaxialement.

4. Vanne selon la revendication 3, dans laquelle le corps de vanne (12) comprend un siège adapté pour recevoir un doigt (86) formé par la première extrémité (36) du premier moyen de rappel (32).

5. Vanne selon la revendication 3 ou 4, dans laquelle le moyen d'entraînement (30) comporte un anneau cylindrique (94) solidaire en rotation du moyen d'entraînement (30) et coaxial des premier et second ressorts de torsion (82, 84), l'anneau cylindrique (94) comprenant une échancrure (98) angulaire adaptée pour permettre la libre rotation du moyen d'entraînement (30) sur un secteur angulaire défini sans entraîner au moins l'un des premier et second moyens de rappel (32, 34), l'échancrure (98) comprenant un premier bord (100) formant la première butée d'entraînement (52) d'un doigt (102) formé par la seconde extrémité (38) du premier moyen de rappel (32) et agencé pour recevoir un doigt (104) formé par la première extrémité (40) du second moyen de rappel (34).

6. Vanne selon la revendication 5, dans laquelle le premier bord de l'échancrure est configuré pour que l'angle entre l'axe longitudinal du doigt formé par la seconde extrémité du premier moyen de rappel et l'axe longitudinal du doigt formé par la première extrémité du second moyen de rappel soit sensiblement nul.

7. Vanne selon l'une la revendication 5 ou 6, dans laquelle l'anneau cylindrique (94) du moyen d'entraînement est agencé entre le premier et le second ressort de torsion (82, 84).

8. Vanne selon l'une quelconque des revendications 4 à 6, dans laquelle le moyen d'entraînement est sensiblement dépourvu de dépouille.

## Patentansprüche

1. Ventil (10) für eine Luftleitung eines Kraftfahrzeugmotors, welches umfasst:
- ein Verschlussteil (18), das zwischen einer ersten Extremposition (P₁) und einer zweiten Extremposition (P₂) beweglich angebracht ist;
- einen Antriebsmotor, der dafür ausgelegt ist, das Verschlussteil (18) zwischen den zwei Extrempositionen (P₁, P₂) mittels eines Antriebsmittels (30) anzutreiben;
- einen Ventilkörper (12);
- Antriebsmittel (30);
- eine Rückstellvorrichtung, die dafür ausgelegt ist, das Verschlussteil (18) in eine Standardposition (P_{LH}) zwischen den zwei Extrempositionen (P₁, P₂) zurückzustellen,
wobei die Rückstellvorrichtung ein erstes Rückstellmittel (32), das so angeordnet ist, dass es das Verschlussteil (18) aus der ersten Extremposition (P₁) in die Standardposition (P_{LH}) zurückstellt, und ein zweites Rückstellmittel (34), das so angeordnet ist, dass es das Verschlussteil (18) aus der zweiten Extremposition (P₂) in die Standardposition (P_{LH}) zurückstellt, umfasst, wobei die zwei Rückstellmittel (32, 34) verschieden und voneinander unabhängig sind und jeweils so angeordnet sind, dass sie während der Rückstellung des Verschlussteils (18) in die Standardposition (P_{LH}) eine Rückstellkraft direkt auf das Antriebsmittel (30) ausüben,
wobei die zwei Rückstellmittel ihre Rückstellkraft alternativ ausüben, um das Verschlussteil (18) aus einer der Extrempositionen in die Standardposition (P_{LH}) zurückzustellen, wobei der Ventilkörper (12) und das Antriebsmittel (30) so gestaltet sind, dass:
- während sich das Verschlussteil (18) zur zweiten Extremposition (P₂) dreht: ein erstes Ende (40) des zweiten Rückstellmittels (34) von dem Antriebsmittel (30) angetrieben wird und ein zweites Ende (42) des zweiten Rückstellmittels (34) durch den Ventilkörper (12) arretiert wird, während ein erstes und ein zweites Ende (36, 38) des ersten Rückstellmittels (32) durch den Ventilkörper (12) arretiert werden; und
- während sich das Verschlussteil (18) zur ersten Extremposition (P₁) dreht: das erste Ende (36) des ersten Rückstellmittels (32) durch den Ventilkörper (12) arretiert wird und das zweite Ende (38) des ersten Rückstellmittels (32) von dem Antriebsmittel (30) angetrieben wird, während das erste und das zweite Ende (40, 42) des zweiten Rückstellmittels (34) durch das Antriebsmittel (30) arretiert werden,
wobei das Ventil einen ersten und einen zweiten Anschlag (44, 46) für eine maximale Verlagerung umfasst, die dafür ausgelegt sind, die Drehung des Antriebsmittels (30) zu blockieren, wenn sich das Verschlussteil (18) in der ersten Extremposition (P₁) bzw. in der zweiten Extremposition (P₂) befindet, wobei das Ventil **dadurch gekennzeichnet ist, dass** der Ventilkörper (12) zwei weitere Anschläge (48, 50) aufweist, die eine Standardposition definieren, wobei einer der zwei weiteren Anschläge (48) dafür ausgelegt ist, das zweite Ende (42) des zweiten Rückstellmittels (34) zu arretieren, wenn sich das Verschlussteil (18) aus der Standardposition PLH zur zweiten Extremposition P2 dreht, wobei der andere der zwei Anschläge (50) dafür ausgelegt ist, das zweite Ende (38) des ersten Rückstellmittels (32) zu arretieren, wenn sich das Verschlussteil (18) aus der Standardposition zur zweiten Extremposition P2 dreht.

2. Ventil nach Anspruch 1, wobei:
- das erste Rückstellmittel (32) an seinem ersten Ende (36) fest mit dem Ventilkörper (12) verbunden ist und das zweite Rückstellmittel (34) an seinem ersten Ende (40) fest mit dem Antriebsmittel (30) verbunden ist;
- das Antriebsmittel (30) einen ersten und einen zweiten Antriebsanschlag (52, 54) umfasst, die dafür ausgelegt sind, das zweite Ende (38) des ersten Rückstellmittels (32), während sich das Verschlussteil zur ersten Extremposition (P₁) dreht, bzw. das erste Ende (40) des zweiten Rückstellmittels (34), während sich das Verschlussteil zur zweiten Extremposition (P₂) dreht, anzutreiben; und
- der Ventilkörper (12) einen ersten und einen zweiten Anschlag (48, 50) umfasst, die dafür ausgelegt sind, das zweite Ende des zweiten Rückstellmittels (34) bzw. des ersten Rückstellmittels (32) zu arretieren, wenn sich das Verschlussteil aus der Standardposition (P_{LH}) zur zweiten Extremposition (P₂) dreht.

3. Ventil nach einem der Ansprüche 1 bis 2, wobei das erste und das zweite Rückstellmittel (32, 34) eine erste bzw. eine zweite Torsionsfeder (82, 84) umfassen, die koaxial angeordnet sind.

4. Ventil nach Anspruch 3, wobei der Ventilkörper (12) einen Sitz umfasst, der dafür eingerichtet ist, einen Finger (86) aufzunehmen, der vom ersten Ende (36) des ersten Rückstellmittels (32) gebildet wird.

5. Ventil nach Anspruch 3 oder 4, wobei das Antriebsmittel (30) einen zylindrischen Ring (94) aufweist, der mit dem Antriebsmittels (30) drehfest verbunden und mit der ersten und der zweiten Torsionsfeder (82, 84) koaxial ist, wobei der zylindrische Ring (94) einen winkligen Ausschnitt (98) umfasst, der dafür eingerichtet ist, die freie Drehung des Antriebsmittels (30) auf einem definierten Winkelsektor, ohne wenigstens eines von dem ersten und dem zweiten Rückstellmittel (32, 34) anzutreiben, zu ermöglichen, wobei der Ausschnitt (98) einen ersten Rand (100) umfasst, der den ersten Antriebsanschlag (52) für einen vom zweiten Ende (38) des ersten Rückstellmittels (32) gebildeten Finger (102) bildet und dafür ausgebildet ist, einen vom ersten Ende (40) des zweiten Rückstellmittels (34) gebildeten Finger (104) aufzunehmen.

6. Ventil nach Anspruch 5, wobei der erste Rand des Ausschnitts so gestaltet ist, dass der Winkel zwischen der Längsachse des Fingers, der vom zweiten Ende des ersten Rückstellmittels gebildet wird, und der Längsachse des Fingers, der vom ersten Ende des zweiten Rückstellmittels gebildet wird, im Wesentlichen null ist.

7. Ventil nach einem der Ansprüche 5 oder 6, wobei der zylindrische Ring (94) des Antriebsmittels zwischen der ersten und der zweiten Torsionsfeder (82, 84) angeordnet ist.

8. Ventil nach einem der Ansprüche 4 bis 6, wobei das Antriebsmittel im Wesentlichen keine Hinterschneidung aufweist.

## Claims

1. Valve (10) for a motor vehicle engine air pipe, comprising:
- a shutter (18) mounted with the ability to move between a first extreme position (P₁) and a second extreme position (P₂) ;
- a drive motor configured to drive the shutter (18) between the two extreme positions (P₁, P₂) by means of a drive means (30);
- a valve body (12);
- a drive means (30);
- a return device configured to return the shutter (18) to a default position (P_{LH}) intermediate between the two extreme positions (P₁, P₂),
in which the return device comprises a first return means (32) arranged in such a way as to return the shutter (18) from the first extreme position (P₁) to the default position (P_{LH}) and a second return means (34) positioned in such a way as to return the shutter (18) from the second extreme position (P₂) to the default position (P_{LH}), the two return means (32, 34) being different from and independent of one another and each positioned in such a way as to exert a return force directly on the drive means (30) while the shutter (18) is being returned to the default position (P_{LH}),
the two return means alternatively exerting their return force in such a way as to return the shutter (18) from one of the extreme positions to the default position (P_{LH}), the valve body (12) and the drive means (30) being configured in such a way that:
- while the shutter (18) is rotating towards the second extreme position (P₂) : a first end (40) of the second return means (34) is driven by the drive means (30) and a second end (42) of the second return means (34) is immobilized by the valve body (12) whereas a first and a second end (36, 38) of the first return means (32) are immobilized by the valve body (12); and
- while the shutter (18) is rotating towards the first extreme position (P₁) : the first end (36) of the first return means (32) is immobilized by the valve body (12) and the second end (38) of the first return means (32) is driven by the drive means (30) whereas the first and second ends (40, 42) of the second return means (34) are immobilized by the drive means (30),
the valve comprising first and second maximum-displacement abutments (44, 46) configured to stop the rotation of the drive means (30) when the shutter (18) is respectively in the first extreme position (P₁) and in the second extreme position (P₂), the valve being **characterized in that** the valve body (12) comprises two more abutments (48, 50) defining a default position, one of the two other stops (48) being configured to immobilize the second end (42) of the second return means (34) when the shutter (18) is turning from the default position P_{LH} towards the second extreme position P₂, the other of the two abutments (50) being configured to immobilize the second end (38) of the first return means (32) when the shutter (18) is rotating from the default position towards the second extreme position P₂.

2. Valve according to Claim 1, which:
- the first return means (32) is solidly attached to the valve body (12) as its first end (36) and the second return means (34) is solidly attached to the drive means (30) at its first end (40);
- the drive means (30) comprises a first and a second drive abutment (52, 54) configured to respectively drive the second end (38) of the first return means (32) while the shutter is rotating towards the first extreme position (P₁) and the first end (40) of the second return means (34) while the shutter is rotating towards the second extreme position (P₂); and
- the valve body (12) comprises first and second abutments (48, 50) configured to immobilize the second end of the second return means (34) and of the first return means (32) respectively when the shutter is rotating from the default position (P_{LH}) towards the second extreme position (P₂) .

3. Valve according to either one of Claims 1 and 2, in which the first and second return means (32, 34) respectively comprise a first and a second torsion spring (82, 84) which springs are arranged coaxially.

4. Valve according to Claim 3, in which the valve body (12) comprises a seat designed to accept a finger (86) formed by the first end (36) of the first return means (32).

5. Valve according to Claim 3 or 4, in which the drive means (30) comprises a cylindrical ring (94) that rotates as long as the drive means (30) and is coaxial with the first and second torsion springs (82, 84), the cylindrical ring (94) comprising an angular slot (98) designed to allow the drive means (30) to rotate freely over a defined angular sector without driving at least one of the first and second return means (32, 34), the slot (98) comprising a first edge (100) forming the first driving abutment (52) for driving a finger (102) formed by the second end (38) of the first return means (32) and designed to accept a finger (104) formed by the first end (40) of the second return means (34).

6. Valve according to Claim 5, in which the first edge of the slot is configured so that the angle between the longitudinal axis of the finger formed by the second end of the first return means and the longitudinal axis of the finger formed by the first end of the second return means is substantially zero.

7. Valve according to Claim 5 or 6, in which the cylindrical ring (94) of the drive means is arranged between the first and second torsion spring (82, 84) .

8. Valve according to any one of Claims 4 to 6, in which the drive means is substantially without undercut.
